# EUROPEAN PATENT SPECIFICATION

(11) **EP 3 517 291 B1**
(45) Date of publication and mention of the grant of the patent: **26.07.2023**
(21) Application number: 18215722.2
(22) Date of filing: 21.12.2018
(51) Int. Cl.: B32B 7/12, B32B 23/08, B32B 27/08, B32B 27/10, B32B 27/16, B32B 27/32, B32B 27/36, B32B 29/06, B32B 37/00

(54) **BARRIER FILM AND LAMINATED PACKAGING MATERIAL COMPRISING THE FILM AND PACKAGING CONTAINER MADE THEREFROM**
SPERRFOLIE UND LAMINIERTES VERPACKUNGSMATERIAL MIT DER FOLIE UND DARAUS HERGESTELLTER VERPACKUNGSBEHÄLTER
FILM DE BARRIÈRE ET MATÉRIAU D'EMBALLAGE STRATIFIÉ COMPRENANT LE FILM ET RÉCIPIENT D'EMBALLAGE RÉALISÉ À PARTIR DE CEUX-CI

(30) Priority: 24.01.2018 EP 18153179
(43) Date of publication of application: 31.07.2019
(73) Proprietor: Tetra Laval Holdings & Finance S.A., 1009 Pully (CH)
(72) Inventor: LORENZETTI, Cesare, 234 39 Lomma (SE)
(74) Representative: Tetra Pak - Patent Attorneys SE

(56) References cited:
- WO-A1-2016/032330
- WO-A1-2017/072123
- JP-A- 2011 116 399
- US-A1- 2017 136 747

## Description

### Technical field

The present invention relates to a laminated packaging material for packaging of liquid food products, comprising a bulk layer of paper or paperboard or other cellulose-based material, a first outermost liquid tight, heat sealable thermoplastic layer, a second innermost liquid tight, heat sealable thermoplastic layer arranged on the inside of the bulk layer to be in direct contact with the filled food product, and a barrier film laminated between the bulk layer and the second innermost layer.

Furthermore, the invention relates to a method for manufacturing of the laminated packaging material and to a packaging container comprising the laminated packaging material or being made of the laminated packaging material.

### Background of the invention

Packaging containers of the single use disposable type for liquid foods are often produced from a packaging laminate based on paperboard or carton. One such commonly occurring packaging container is marketed under the trademark Tetra Brik Aseptic^{®} and is principally employed for aseptic packaging of liquid foods such as milk, fruit juices etc, sold for long term ambient storage. The packaging material in this known packaging container is typically a laminate comprising a bulk or core layer, of paper, paperboard or other cellulose-based material, and outer, liquid-tight layers of thermoplastics. In order to render the packaging container gas-tight, in particular oxygen gas-tight, for example for the purpose of aseptic packaging and packaging of milk or fruit juice, the laminate in these packaging containers normally comprises at least one additional layer, most commonly an aluminium foil.

On the inside of the laminate, i.e. the side intended to face the filled food contents of a container produced from the laminate, there is an innermost layer, applied onto the aluminium foil, which innermost, inside layer may be composed of one or several part layers, comprising heat sealable thermoplastic polymers, such as adhesive polymers and/or polyolefins. Also on the outside of the bulk layer, there is an outermost heat sealable polymer layer.

The packaging containers are generally produced by means of modern, high-speed packaging machines of the type that form, fill and seal packages from a web or from prefabricated blanks of packaging material. Packaging containers may thus be produced by reforming a web of the laminated packaging material into a tube by both of the longitudinal edges of the web being united to each other in an overlap joint by welding together the inner- and outermost heat sealable thermoplastic polymer layers. The tube is filled with the intended liquid food product and is thereafter divided into individual packages by repeated transversal seals of the tube at a predetermined distance from each other below the level of the contents in the tube. The packages are separated from the tube by incisions along the transversal seals and are given the desired geometric configuration, normally parallelepipedic, by fold formation along prepared crease lines in the packaging material.

The main advantage of this continuous tube-forming, filling and sealing packaging method concept is that the web may be sterilised continuously just before tube-forming, thus providing for the possibility of an aseptic packaging method, i.e. a method wherein the liquid content to be filled as well as the packaging material itself are reduced from bacteria and the filled packaging container is produced under clean conditions such that the filled package may be stored for a long time even at ambient temperature, without the risk of growth of micro-organisms in the filled product. Another important advantage of the Tetra Brik^{®} -type packaging method is, as stated above, the possibility of continuous high-speed packaging, which has considerable impact on cost efficiency.

Packaging containers for sensitive liquid food, for example milk or juice, can also be produced from sheet-like blanks or prefabricated blanks of the laminated packaging material of the invention. From a tubular blank of the packaging laminate that is folded flat, packages are produced by first of all building the blank up to form an open tubular container capsule, of which one open end is closed off by means of folding and heat-sealing of integral end panels. The thus closed container capsule is filled with the food product in question, e.g. juice, through its open end, which is thereafter closed off by means of further folding and heat-sealing of corresponding integral end panels. An example of a packaging container produced from sheet-like and tubular blanks is the conventional so-called gable-top package. There are also packages of this type which have a moulded top and/or screw cap made of plastic.

A layer of an aluminium foil in the packaging laminate provides gas barrier properties quite superior to most polymeric gas barrier materials. The conventional aluminium-foil based packaging laminate for liquid food aseptic packaging is still the most cost-efficient packaging material, at its level of performance, available on the market today.

Any other material to compete with the Alufoil-based materials must be cost-efficient regarding raw materials, have at least comparable food preserving properties and have a comparably low complexity during converting into a finished packaging laminate.

Among the efforts of developing non-aluminium-foil materials for liquid food carton packaging, there is also a general incentive towards developing pre-manufactured films or sheets having high and multiple barrier functionalities, i.e. not only oxygen and gas barrier but also water vapour, chemical- or aroma-substance barrier properties, which may replace the aluminium-foil barrier material, of the conventional laminated packaging material, and adapt it to the conventional Al-foil process for lamination and manufacturing.

All hitherto suggested such barrier films each have at least one drawback, when compared to the conventional aluminium foil, for use in liquid paperboard packaging of liquid food. One important drawback may be the high manufacturing costs of such a barrier film and/or the complexity in the manufacturing method thereof. Another drawback may be that it adds complexity in the lamination process when converting into a laminate packaging material, such that it is not possible to directly just replace an aluminium foil.

Publication No. WO2017/072123A1 relates to a laminated packaging material for liquid packaging, comprising outermost heat sealable and liquid tight thermoplastic layers, and a barrier film of a substrate polymer film of i.a. polyester or polyamide, PEF disclosed as one alternative. The barrier film is coated with a barrier coating of diamond-like carbon (DLC) on one or both sides of the film, and laminated into the final structure via polyolefin layers, such as polyethylene.

Publication No. JPA2011116399 describes a heat-insulating paper container and laminate with a paper, a PET layer and a foamed thermoplastic resin layer for the heat insulation purposes.

Publication No.US2017/136747A1 relates to films and multilayer structures having a layer of PEF/ PTF with an amorphous thermal processing window rendering it heat sealable, i.a. for pouches and bags, i.a. for liquid packaging.

Publication No. WO2016/032330 relates to PEF films and their use in multilayer laminates.

### Summary

It is, accordingly, an object of the present invention to provide good laminating packaging materials without an aluminium foil, having good package integrity, food preserving barrier properties as well as resistance to leakage in filled, formed and sealed paperboard containers for liquid or semi-liquid food products.

It is another object of the invention to maximize the amount of materials in such a laminated packaging material being produced from renewable, i.e. biobased sources.

It is a further general object of the invention to provide packaging materials for oxygen-sensitive products, such as laminated packaging materials for liquid, semi-solid or wet food products, which do not contain aluminium foil but still can provide packages filled with the food product, having good gas and other barrier properties suitable for long-term, aseptic packaging at reasonable cost.

Yet a further object of the invention is to provide a cost-efficient, non-foil, paper- or paperboard-based and heat-sealable packaging laminate having good gas and water vapour barrier properties and good internal adhesion between its laminated layers, for the purpose of manufacturing aseptic packaging containers for long-term storage of liquid foods at maintained nutritional quality under ambient conditions.

These objects are attainable according to the present invention by the laminated packaging material, the packaging container and the method of manufacturing the packaging material, as defined in the appended claims.

According to a first aspect of the invention, there is provided a laminated packaging material for packaging of liquid food products, comprising a bulk layer of paper or paperboard or other cellulose-based material, a first outermost liquid tight, heat sealable thermoplastic layer, arranged on the outside of the bulk layer to constitute the outside of a package formed from the packaging material, a second innermost liquid tight, heat sealable thermoplastic layer arranged on the inside of the bulk layer to be in direct contact with the filled food product, and a barrier film (14;24) from a film substrate comprising a polyester selected from the group consisting of polyethylene-2,5-furandicarboxylate (PEF) and polytrimethylene furandicarboxylate (PTF), a blend and a co-polymer thereof, coated with a vapour deposited barrier coating comprising aluminium oxide, the barrier film being laminated between the bulk layer and the second, innermost liquid tight, heat sealable thermoplastic layer, wherein the barrier film is laminated to the bulk layer by an interjacent thermoplastic bonding layer comprising a polyolefin, wherein the vapour deposited barrier coating is facing towards the bulk layer and wherein the surface of the film substrate has been pre-treated by plasma or corona treatment on the surface to be coated by the aluminium oxide.

The selected polyester materials exhibit excellent gas barrier properties, and moreover water vapour barrier properties, which is important in the field of long shelf-life, liquid packaging. Furthermore, oriented films from the materials have good mechanical properties, such as high tensile strength, elongation at break e t c, to be suitable for lamination into a carton-based laminated packaging material for liquid and beverage packaging. Moreover, the polyester materials have good resistance to chemicals and good barrier properties towards migration of low-molecular substances, aroma substances, free fatty acids and the like. Furthermore, it has now been realised that a combination of such a polyester film substrate and vapour deposition coated barrier coatings may provide surprisingly good properties at a balanced cost and reasonable complexity in laminated packaging materials for liquid food packaging. Such combined barrier films may thus directly replace an aluminium-foil barrier, and provide an equal, or improved laminated, carton-based packaging material for liquid food products.

According to a second aspect, there is provided a packaging container for liquid food products, comprising the laminated packaging material. Packaging containers may be manufactured from the laminated packaging material partly or entirely. Thanks to the good barrier properties and mechanical strength of the laminated packaging material, the packaging containers also can have excellent barrier properties for long-term aseptic, ambient storage, as well as good integrity properties, both regarding laminate-layer adhesion and seal-strength of the formed, filled and sealed package.

According to a further embodiment, the packaging container may be formed from the laminated packaging material and partly sealed, filled with liquid or semi-liquid food and subsequently and finally completely sealed, by sealing of the packaging material to itself, optionally in combination with a plastic opening or top part of the package.

According to a third aspect, a method for manufacturing of the laminated packaging material is provided. The method comprises the steps, in any order, of providing a bulk layer of paper or paperboard or other cellulose-based material, providing a barrier film by pre-treating a film substrate comprising a polyester selected from the group consisting of polyethylene-2,5-furandicarboxylate (PEF), polytrimethylene furandicarboxylate / furanoate (PTF), a blend or a co-polymer thereof, by plasma or corona treatment on the surface to be coated, vapour deposition coating the pre-treated film substrate with a barrier coating comprising aluminium oxide, laminating the barrier film to the inner side of the bulk layer, by means of an interjacent thermoplastic bonding layer comprising a polyolefin, applying a first outermost liquid tight, heat sealable thermoplastic layer onto the outer side of the bulk layer, and applying a second innermost liquid tight, heat sealable thermoplastic layer on the inner side of the barrier film.

The barrier coating of the barrier film is facing the bulk layer. The side of the film substrate that is not coated with a barrier coating may be laminated to a polyolefin layer via an interjacent bonding layer of a primer or adhesion-promoting layer to improve the bonding between the layers in the laminate across the full extension of its layered surfaces.

It has been seen that laminated liquid food packaging materials from such barrier films make it possible to reach both good adhesion between the layers of the laminate, and good oxygen barrier properties, also at high humidity conditions, at reasonable complexity of the materials used and in the lamination manufacturing processes.

### Detailed description

The polyester comprised in the barrier film substrate may be a polymer obtained by a condensation reaction between furandicarboxylic acid or its dimethyl ester and diols such as ethylene glycol, 1,3-propanediol (trimethylene glycol), 2-methyl-1,3-propanediol, 1,4 butanediol, diethylene glycol, neopentyl glycol, tetramethyl cyclobutanediol or isosorbide.

Preferred polyesters are polyethylene furandicarboxylate (PEF) and poly trimethylene furandicarboxylate (PTF), the latter also called polypropylene furandicarboxylate (PPF). These polymers can contain an additional monomer preferably chosen from those above.

A barrier film comprising such polyesters may be applied into a laminated packaging material according to the invention, in the form of a pre-manufactured oriented film substrate, such as a blown film substrate or a cast, oriented film substrate, which is further vapour deposition coated with a barrier coating. Both types of pre-manufactured film substrates are manufactured by extruding the molten polyester composition into a sheet of film, which is subsequently stretched into a considerably thinner but stable film. It means that the film will not shrink or deteriorate due to changes of conditions in the environment around it, or due to ageing.

The film may be oriented either mono-axially, i.e. in the machine direction, or bi-axially in both the machine direction (MD) and the cross-direction (DC). Bi-axial orientation may be performed by sequential orientation in a tenter frame, first in one direction and second in a perpendicular direction, such as first MD-wise and secondly CD-wise, or by simultaneous bi-axial orientation process, thus stretching the film in perpendicular directions at the same time. The film may be oriented at a ratio from 2.2 to 5 in the machine direction and from 2.2 to 5 in the cross direction, more preferably from 3.5 to 4.5.

A mono-oriented film is oriented only or mainly in the machine direction at a ratio from 2.2 to 5.2, preferably from 4.2 to 5.2.

The stretching ratio in a slow crystallizing polymer film such as PEF may be determined by measuring the total crystallinity by X-ray Diffraction analysis (XRD) or Differential Scanning Calorimetry analysis (DSC) or a combination of both these techniques. Stretching ratio may also be determined by FT-IR and Ellipsometry. All the mentioned techniques require calibration with reference films produced at various stretching ratios.

In case of bioriented films, the orientation can be carried out in a Tenter-frame type equipment of the simultaneous type or sequential type.

Extrusion cast films are typically made by extruding a sheet or film, by melting polymer granules into a homogenous melt and forcing it through an elongated slit die by an extruder screw, to form a molten curtain or precursor film, onto a cooling surface, such as the surface of a cooled metal roller, and thereafter subjecting the cooled or partially cooled film to orientation operations.

Orientation may also be conveniently carried out by using film-blowing double or triple bubble type equipment, in connection to the melt extrusion of a tubular film through an annular die (also by feeding the molten polymer by an extruder screw) and simultaneously blowing air or gas inside the film tube, such that it expands in all directions into a "bubble" or balloon. Such process and equipment is described for example in US patent No. 5,298,202.

The melt extrusion temperature of these polyesters is suitably from 230 to 290 ºC.

Orientation is carried out after cooling (and if necessary further reheating) to a suitable elevated temperature such as from 70 to 130 ºC.

In order to minimise or avoid shrinking of the oriented film, it is allowed to set or relax in a further, brief heating operation while tensioning the film. In the process of film blowing, this further heat setting operation may form an integral part of the bubble expansion process, alternatively film relaxation can be carried out by re-inflating the film tube and keeping it at sufficiently high temperature. This last process is known as triple bubble orientation technology and further details can be found in WO2013063310.

Typical thicknesses of oriented films for the purpose of barrier layers in packaging material may be from 6 to 30 µm, such as from 8 to 20 µm. The oriented films are characterised by having a high degree of crystallinity, and excellent mechanical properties. The films may thus have a tensile strength of at least 100 MPa (ISO527) and a tensile modulus of at least 2000 MPa, such as from 2000 to 12000 MPa. Further, the films are flexible and not brittle, exhibiting an elongation at break of at least 25 % (ISO527).

By co-extruding several molten streams, by several separate extruder screws, through a common feedblock into adjacent layers or sheets, a multilayer structure film substrate may be formed by these same processes, whereby the polymers or polymer compositions of the different layers or melt streams may have different although compatible, or only slightly different compositions. Thus, layers with differing functionality may be efficiently laminated to each other, already as pre-manufactured films, which may be further laminated to a base layer, such as paperboard or another cellulose-based bulk layer.

According to an embodiment, a thin film substrate of a single polyester barrier layer should preferably be 12 µm or below, such as from 10 to 12 µm. At higher thickness of the film substrate, the tearing and cutting properties of the laminated packaging material may be impaired because of the higher strength of the material. Oriented films usually exhibit an increased strength and toughness against tearing or cutting through the film, and when included in laminated packaging materials such films can cause difficulties in opening of a package, unless an indentation or other contrivance for initiating the tear is provided. By selecting as thin as possible polymer film substrates, the openability of a subsequently laminated packaging material will not be impaired, in comparison to laminated packaging materials in which the barrier materials are more brittle or wherein the polymer materials are less strong and entirely made by melt extrusion coating and melt extrusion lamination.

The oriented polyester film substrates of the invention are robust regarding mechanical properties, and have inherent high temperature resistance and relatively good resistance to chemicals and moisture.

Various vapour deposition barrier coatings have been considered in the designing of packaging materials to fulfil the gas barrier required and the needs of various mechanical and other physical properties.

Vapour deposited barrier layers may be applied by means of physical vapour deposition (PVD) or chemical vapour deposition (CVD) onto a substrate surface of a film material.

Thin vapour deposited layers are normally merely nanometer-thick, i.e. have a thickness in the order of magnitude of nanometers, for example of from 1 to 500 nm (50 to 5000 Å), preferably from 1 to 200 nm, more preferably from 5 to 100 nm and most preferably from 5 to 50 nm.

One type of vapour deposition coating, not forming part of the present invention, often having some barrier properties, in particular water vapour barrier properties, are so called metallisation coatings, e.g. aluminium metal physical vapour deposition coatings.

Such a vapour deposited layer, substantially consisting of aluminium metal may have a thickness of from 5 to 200 nm, or to an optical density from 1 to 5, such as from 1.5 to 3.5, such as from 1.5 to 3, which corresponds to less than 1 % of the aluminium metal material present in an aluminium foil of conventional thickness for packaging, i.e. 6,3 µm. While vapour deposition metal coatings require very little metal material, they provide a lower level of oxygen barrier properties, and may need to be combined with a further gas barrier material in order to provide a final laminated material with sufficient barrier properties. On the other hand, they may complement a further gas barrier layer, and provide good water vapour barrier properties.

The vapour deposition coatings of the present invention are aluminium oxide (AlOₓ, Al₂O₃) coatings. Generally, such coatings may be applied by means of physical vapour deposition, PVD.

Other coatings may be applied by means of a plasma enhanced chemical vapour deposition method (PECVD), wherein a vapour of a compound is deposited onto the substrate under more or less oxidising circumstances.

Silicon oxide coatings (SiOx), not forming part of the present invention,may alternatively be applied by a PECVD process.

Unfortunately, all types of SiOx coatings show bad adhesion properties when laminated by melt extrusion lamination to polyolefins and other adjacent polymer layers. Special expensive adhesives or adhesive polymers are needed to reach sufficient adhesion in a packaging laminate of the type intended for liquid carton packaging. One type of silicon oxide coating, having both gas barrier and water vapour barrier properties also at higher humidity levels, as required in liquid packaging, has the general composition formula SiOxCy, where in x is from 1.5 to 2.2 and y is from 0.15 to 0.8.

The surface of the film substrate may be pre-treated with a plasma containing a precursor compound selected from a hydrocarbon, a silane, a siloxane and a micture thereof. As seen in the examples, improved properties are seen at high humidity conditions, such as 80% RH.

It has also been seen that similar improvements may be obtainable by after-treating the barrier-coated film in the same way, i.e. after the formation of the barrier coating. The film may thus be both pre-treated and after-treated to ensure as good results as possible, regarding OTR and peeling force. The barrier coated film may alternatively be only after-treated, with some similar improvements. The pre- and after treatements of the surfaces of the film substrate and the barrier coating, respectively, may be done in the same apparatus as the barrier coating itself, by using a different (or same) gas composition in a plasma prezone and/or a plasma post-zone. The surface treatments may alternatively take place in separate plasma chambers of the apparatus. They are very brief plasma treatments, acting on the surface just a few milliseconds.

The laminated packaging material further comprises a first outermost liquid tight, heat sealable polyolefin layer and a second innermost liquid tight, heat sealable polyolefin layer. Suitable thermoplastics for the outermost and innermost heat sealable liquid-tight layers are polyolefins such as polyethylene and polypropylene homo- or co-polymers, preferably polyethylenes and more preferably polyethylenes selected from the group consisting of low density polyethylene (LDPE), linear LDPE (LLDPE), single site catalyst metallocene polyethylenes (m-LLDPE) and blends or copolymers thereof. According to a preferred embodiment, the outermost heat sealable and liquid-tight layer is an LDPE, while the innermost heat sealable, liquid-tight layer is a blend composition of m-LLDPE and LDPE for optimal lamination and heat sealing properties.

The thickness of the innermost heat sealable layer may be from 18 to 50 µm, such as from 20 to 40 µm. The thickness of the adhesion-promoting layer may be from 4 to 6 µm. The thickness of the outermost heat sealable layer may be from 10 to 25 µm.

The laminated packaging material further thus comprise a bulk layer of paper or paperboard, a first outermost liquid tight, heat sealable polyolefin layer, a second innermost liquid tight, heat sealable polyolefin layer and, arranged on the inner side of the bulk layer of paper or paperboard, towards the inside of a packaging container made from the packaging material, between the bulk layer and the innermost layer, said barrier film.

The barrier film may be bonded to the bulk layer by an intermediate adhesive, or thermoplastic polymer bonding layer, or so-called laminating layer, thus binding the barrier film to the inner surface of the bulk layer (inner being the direction towards the interior of a packaging container made from the material). The bonding/laminating layer may be a polyolefin layer, or a layer of a polyethylene-based polyolefin copolymer or a polyethylene blend, including in the majority ethylene monomer units. Preferably, the bulk layer is bonded to the barrier film by melt extrusion laminating the bonding polymer layer between a web of the bulk layer and a web of the barrier film, and simultaneously pressing the three material layers together while being forwarded through a lamination roller nip, thus providing a laminated structure, i.e. by extrusion laminating the bulk layer to the barrier film.

The same thermoplastic polyolefin-based materials, as listed regarding the outermost and innermost layers, and in particular polyethylenes, may be suitable in bonding layers interior of the laminated material, i.e. between a bulk or core layer, such as paper or paperboard, and the barrier film. In an embodiment, the thermoplastic bonding layer may be a polyethylene layer, such as a low density polyethylene (LDPE) layer.

The polyester film substrate may have a primer or an adhesion-promoting coating on the side which is not coated with a barrier coating. The purpose of the primer or adhesion-promoting coating is to provide better bonding to adjacent layers when laminating the film into a laminated packaging material. For example, it makes it possible to create or improve the adhesion strength to an adjacent extrusion-coated polymer layer, such as a polyolefin-based polymer layer, and the contacting surface thereof.

A suitable primer may be a composition comprising a compound selected from the group of aminosilanes and polyethyleneimines, examples of them can be found in EP0359017 or US5453326 respectively. Preferably adhesion primers are applied in line with film extrusion, for instance they could be applied after the MD orientation and before TD stretching of a typical tenter-frame film-manufacturing plant. Such primers adhere well to polyolefins, such as polyethylene polymers, if a temperature above 280, such as above 290, such as above 300, such as above 310 ºC, is reached in melt extrusion coating or lamination. A primer of this type may be incorporated into the barrier film in order to create adhesion to a subsequently melt applied laminating or bonding layer of polyolefin. In the case when the barrier coating of the barrier film is facing towards the inside in the laminate, i.e. towards the interior of a package, a primer on the other side of the film that has no barrier coating, ensures adhesion to the laminating, bonding layer between the bulk layer and the barrier film. If the barrier coating instead is facing towards the bulk layer in the laminate, the primer ensures good adhesion to the polyolefins in the inner heat sealable and liquid tight layers.

A further type of primer coating, integral with a pre-manufactured film, may be a very thin vapour deposition-coated primer of a diamond-like carbon (DLC). As thin coating thicknesses as from 2 to 5 nm, may suffice to create excellent bonding properties to an adjacent, melt extruded polyolefin layer, such as an intermediate bonding layer between the bulk paperboard and the barrier PEF film, or between the barrier PEF film and an innermost heat sealable polyolefin layer. Thus, the purpose of such a vapour deposited coating is merely to create sufficient adhesion by a very quick, surface-treating kind of carbon coating. Such a primer coating may also be applied on the barrier coating side of the barrier film, i.e. on top of the actual barrier coating, for improved adhesion of that side of the film to adjacent layers of thermoplastic polymers in a laminated material.

Other, similar compounds may be used in an adhesion-promoting composition for wet laminating a surface of the polyester film substrate to the bulk layer. In wet lamination, a dispersion or solution of an adhesion-promoting composition is applied, such that no drying is needed and the moisture from the adhesion-promoting composition is efficiently absorbed into the bulk layer of paperboard or other cellulose-based material, while adhering the polyester surface to the paperboard.

Such an adhesion-promoting composition may comprise the same type of chemicals as used in primers, i.e. PEI or polyvinyl silane, or acrylic-based or urethane-based polymers for aquoues dispersions or solutions, polysaccharide dispersions or solutions, such as starches or celluloses or their derivatives, or polyvinyl-acetate based adhesives.

When the barrier film comprises an un-primed or untreated film substrate of a polyester, used according to the invention, a bonding polymer or adhesion-promoting polymer layer may be a copolymer of ethylene with a second comonomer being acrylate or methacrylate esters, such as esters of acrylic acid and methacrylic acid with methanol, ethanol, butanol, isopropanol, isobutanol, ethyl hexanol, and with a third type of comonomer having a maleic anhydride or glycidyl methacrylate group. Such adhesive polymers having maleic anhydride groups in particular, can be obtained by including maleic anhydride functionality also by a separate grafting process, besides being used as a main chain comonomer.

Corresponding modified polypropylene-based thermoplastic adhesive polymers or bonding layers may also be used, depending on the requirements of the finished packaging containers.

Such an adhesive polymer layer or "tie layer" may thus be applied together with a polyolefin intermediate bonding layer, or as a single bonding layer, binding the barrier film to the bulk layer.

According to a preferred embodiment, good adhesion between the barrier layer and adjacent thermoplastic polyolefin layer is created by a layer of an adhesion-promoting blend of a matrix polyolefin layer and an added amount thereto of an epoxidized compound selected from epoxidized natural oil, such as epoxidized soybean oil (ESBO) and epoxidized linseed oil (ELO), epoxidized natural rubber and a cyclic carbonate derivative of an epoxidized natural oil or rubber. Alternative natural oils that may be epoxidized and used in a similar way for this purpose, are for example tung oil, rapeseed oil, canola oil and olive oil. Epoxidized elastomers or rubbers provide a further alternative to epoxidized natural oils, such as epoxidized poly-1,3-butadiene, epoxidized poly-1,2-butadiene, epoxidized EPDM (ethylene-propylene-diene-monomer co-polymers), and epoxidized natural rubber (i.e. epoxidized polyisoprene). Such epoxidized elastomers may be more or less based on renewable raw materials, although being synthetically made. Of course, natural raw materials are preferred from an environmentally sustainable perspective, and thus an epoxidized natural rubber as harvested from the rubber tree, is preferred among the alternative epoxidized elastomers. According to a further embodiment an epoxidized compound, a cyclic carbonate derivative of an epoxidized natural oil or epoxidized natural rubber, is used as an adhesion promoting layer. The cyclic carbonate derivatives are preferable, because they provide even better adhesion to adjacent layers than the mere corresponding epoxidized compounds. The cyclic carbonate derivatives are made by contacting epoxidize compounds, such as epoxidized natural oil or natural rubber, with carbon dioxide.

Such an adhesion-promoting composition may be applied as a bonding layer between a polyester barrier film and adjacent polymer layers, and provide excellent interlayer adhesion bonding at a fairly low cost, compared to other adhesive polymers, as those described above. A great advantage of such a blend comprising epoxidized compounds, such as epoxidized natural oil or rubber, such as anESBO or ELO, blended with polyolefin is, that such adhesion-promoting materials can be fully bio-based, i.e. based on renewable sources of plant origin at 100 %.

By adding ESBO or ELO to e.g. polyethylene, it acts as a compatibilizer and enables adhesion between a melt extrudate layer of the polyethylene composition and a e.g. a PEF film substrate surface. This effect is obtained at a concentration as low as 500 ppm by weight (0.05 wt%) of ESBO based on the polyethylene.

In the preparation of laminated materials suitable for liquid food packaging, a concentration above 1000 ppm (0.1 wt%) is preferable, while a concentration above 5000 ppm (0.5 wt%) does not normally benefit adhesion nor other process parameters. Thus, the concentration of an ESBO or ELO additive in a polyolefin composition for an adhesion-promoting layer, should be from 0.1 to 0.5 wt %.

It has also been observed that improved barrier properties towards migrating low-molecular compounds, such as free fatty acids or sulfites (present in wines), are provided by laminating a PEF -type polyester barrier layer by means of adhesion-promoting layers of a polyethylene-based composition with an epoxidized natural oil, such as ESBO.

Similarly, adhesion between PEF type barrier layers and ESBO containing compositions such as above, show remarkable robustness and no delamination is observed upon exposure of the laminated material to fatty acids and sulfites, otherwise negaitvely affecting adhesion in multilayer packaging material structures.

The corresponding use of ESBO and similar epoxidized compounds to adhere polyolefins, such as polyethylene PE, to PET is not satisfactory as adhesion is lost under the influence of sulfites, free fatty acids and other migrating molecules over time.

What has been surprisingly found is that the same does not occur when the polyester film is PEF or PTF.

The mechanism behind this effect is not fully understood, but it is believed to arise from the different chemical structure of PEF/PTF and possibly by the oxygen bearing furan moieties present in those polymers, that may interact in a different way with epoxides.

The ESBO-containing adhesion-promoting layer, should preferably be melt extruded at temperatures above 290, such as above 300, such as above 310 ºC. The melt extrusion temperature may be decreased if the extrudate is contacted with an atmosphere containing ozone, before contacting the surfaces to be laminated.

The minimum thickness of the various adhesion-promoting layer materials may vary from 1 to 6, such as from 4 to 6 µm. A primer would be applied thinner, at from 0.05 to 0.2 g/m², dry weight. If an entire bonding layer is made of the adhesion-promoting polymer or polymer composition, such an adhesion-promoting layer may be thicker, such as up to 12, such as up to 15 µm.

Alternatively, or in addition, improved adhesion may be achieved by treating the uncoated surface of the polyester film substrate with an atmospheric plasma treatment or modified corona treatment in the presence of a gas to provide grafting of the barrier film surface (such as described in for example FR2873705, EP1023366, or WO2013041312). This technique consists in treating the polyester barrier film with a dielectric barrier discharge (DBD) in presence of an appropriate mixture of gases. The surface may be provided with surface grafts from nitrogen-containing groups such as amines, amides and imides, by such a brief plasma treatment (milliseconds), that will enable good bonding to a molten extruded polymer, which is applied to the surface after the treatment. A treated barrier film shows thus after treatment improved adhesion toward various types of polyolefins, such as polyethylene, applied in the molten state on to the treated film surface. Preferably, the polyethylene then should be melt applied at a temperature above 280, such as above 300, such as above 310 ºC, in order to obtain the required adhesion for liquid packaging, i.e. wet, high humidity, conditions.

It has been seen that similar effects are achieved if only, or also, treating the surface of the coated barrier in the same way.

In a further embodiment, the innermost liquid-tight and heat sealable thermoplastic polymer may alternatively be a polyester selected from the group consisting of polyethylene-2,5-furandicarboxylate (PEF) and polytrimethylene furandicarboxylate (PTF), a blend and a co-polymer of any of these polyesters. In such a case, the PEF- or PTF-based polymer layer will have direct contact with the food product to be packed in a packaing container made of the material. It may then be applied by an extrusion coating process or first by being formed into a film, which is subsequently laminated to the bulk layer. A PEF- or PTF-based film for direct contact with food, must comprise a heat sealable layer, such as a layer of PEF featuring both a reduced melting point and reduced crystallinity. For achieving this purpose, it is suitable to incorporate an additional monomer in the PEF structure, such as monomers capable of increasing the glass transition temperature, Tg, of the polymer, and which are obtainable from renewable resources. Particularly suitable such monomers are isosorbide and cyclobutanediol.

In an embodiment, a combined barrier film substrate of a polyester selected from the group consisting of polyethylene-2,5-furandicarboxylate (PEF) and polytrimethylene furandicarboxylate (PTF), a blend and a co-polymer of any of these polyesters, having a high degree of crystallinity is manufactured in an oriented barrier film, is pre-manufactured together with a second, heat sealable layer of the same film, also from a polyester selected from the group consisting of polyethylene-2,5-furandicarboxylate (PEF) and polytrimethylene furandicarboxylate (PTF), a blend and a co-polymer of any of these polyesters, being less crystalline (more amorphous in nature) and with a melting point to be suitable in a heat sealing process.

In a further embodiment, the bulk layer of the above depicted laminate structures have, on the other side, a conventional, liquid tight, heat sealable polyolefin as the outermost layer. Alternatively, the outermost layer may also be a polyester of the same or similar type as the innermost layer, on the inside.

It has been seen that the laminated packaging material according to the invention has excellent integrity, with excellent adhesion between the adjacent layers within the laminated construction and high quality and durability of the barrier layer. Especially, for the packaging of liquids, and wet food, it is important that the inter-layer adhesion within the laminated packaging material is maintained also under wet packaging conditions.

With the term "long-term storage", in connection with the present invention, is meant that the packaging container should be able to preserve the qualities of the packed food product, i.e. nutritional value, hygienic safety and taste, at ambient conditions for at least 1 or 2 months, such as at least 3 months, preferably longer, such as 6 months, such as 12 months, or more.

With the term "package integrity", is generally meant the package tightness, i.e. the resistance to leakage or breakage of a packaging container. More specifically, it defines the resistance of the package to intrusion of microbes, such as bacteria, dirt, and other substances, that may deteriorate the filled food product and shorten the expected shelf-life of the package.

One main contribution to the integrity of a package from a laminated packaging material is provided by good internal adhesion between adjacent layers of the laminated material. Another contribution comes from the material resistance to defects, such as pinholes, ruptures and the like within each material layer itself, and yet another contribution comes from the strength of the sealing joints, by which the material is sealed together at the formation of a packaging container. Regarding the laminated packaging material itself, the integrity property is thus mainly focused on the adhesion of the respective laminate layers to its adjacent layers, as well as the quality of the individual material layers. Regarding the sealing of the packages, the integrity is mainly focussed on the quality of the sealing joints, which is ensured by well-functioning and robust sealing operations in the filling machines, which in turn is ensured by adequately adapted heat-sealing properties of the laminated packaging material.

The term "liquid or semi-liquid food" generally refers to food products having a flowing content that optionally may contain pieces of food. Dairy and milk, soy, rice, grains and seed drinks, juice, nectar, still drinks, energy drinks, sport drinks, coffee or tea drinks, coconut water, wine, soups, jalapenos, tomatoes, sauce (such as pasta sauce), beans and olive oil are some nonlimiting example of food products contemplated.

The term "aseptic" in connection with a packaging material and packaging container refers to conditions where microorganisms are eliminated, in-activated or killed. Examples of microorganisms are bacteria and spores. Generally an aseptic process is used when a product is aseptically packed in a packaging container. For the continued asepticity during the shelf-life of the package, the package integrity properties are of course very important. For long-term shelf-life of a filled food product, it may furthermore be important that he package has barrier properties towards gases and vapours, such as towards oxygen gas, in order to keep its original taste and nutritional value, such as for example its vitamin C content.

With the term "bulk layer" is normally meant the thickest layer or the layer containing the most material in a multilayer laminate, i.e. the layer which is contributing most to the mechanical properties and the dimensional stability of the laminate and of packaging containers folded from the laminate, such as paperboard or carton. It may also mean a layer providing a greater thickness distance in a sandwich structure, which further interacts with stabilising facing layers, which have a higher Young's modulus, on each side of the bulk layer, in order to achieve sufficient such mechanical properties and dimensional stability.

Thickness measurements may be performed by Transmission Electronic Microscopy using a Titan 80-300, FEI equipment. Samples are prepared by ultramicrotomy on an EM UC6 Microtome from Leica.

OTR was measured with Oxtran 2-60 (Mocon Inc.) equipment based on coulometric sensors, with a standard deviation of the results being ±0,5 cm³/m²/day. A low OTR is another main contribution to package suitability for long-term storage, since oxygen is generally detrimental to the preservation of food products.

The method for determining OTR identifies the amount of oxygen per surface and time unit at passing through a material at a defined temperature, given atmospheric pressure, and chosen driving force.

Adhesion measurements are performed at room temperature with a 180° degrees peel force test apparatus (Telemetric Instrument AB), 24 h after the LDPE lamination. Peeling is performed at the barrier layer/bonding layer interface, the peel arm being the barrier film. When needed, distilled water droplets are added to the peeled interface during peeling to assess the adhesion under wet conditions, i.e. the conditions when the laminated packaging material has been saturated with migrating moisture through the material layers, from the liquid stored in a packaging container made from the laminated material, and/or by storage in a wet or highly humid environment.The given adhesion value is given in N/m and is an average of 6 measurements.

A dry adhesion of more than 200 N/m ensures that the layers do not delaminate under normal package manufacturing conditions, e.g. when bending and fold-forming the laminated material. A wet adhesion of this same level ensures that the layers of the packaging laminate do not delaminate after filling and package formation, during transport, distribution and storage.

### Examples and description of preferred embodiments

In the following, preferred embodiments of the invention will be described with reference to the drawings, of which:
Fig. 1a-1c show each different variants of a schematic, cross-sectional view of a laminated packaging material according to the invention,
Fig. 2a shows a schematic view of a plant for physical vapour deposition (PVD) of a metal or metal oxide coating onto a film substrate,
Fig. 2b shows a schematic view of a plant for plasma surface pre-treatment of a film substrate, or at a larger scale, for chemical vapour deposition (CVD) or plasma enhanced CVD (PECVD), of a coating onto a film substrate,
Fig. 3 shows schematically an example of a method, for manufacturing the laminated packaging material,
Fig. 4 is showing an alternative method for manufacturing the laminated packaging material,
Fig. 5a, 5b, 5c and 5d are showing typical examples of packaging containers produced from the laminated packaging material according to the invention, and
Fig. 6 is showing the principle of how such packaging containers are manufactured from the packaging laminate in a continuous, roll-fed, form, fill and seal process.

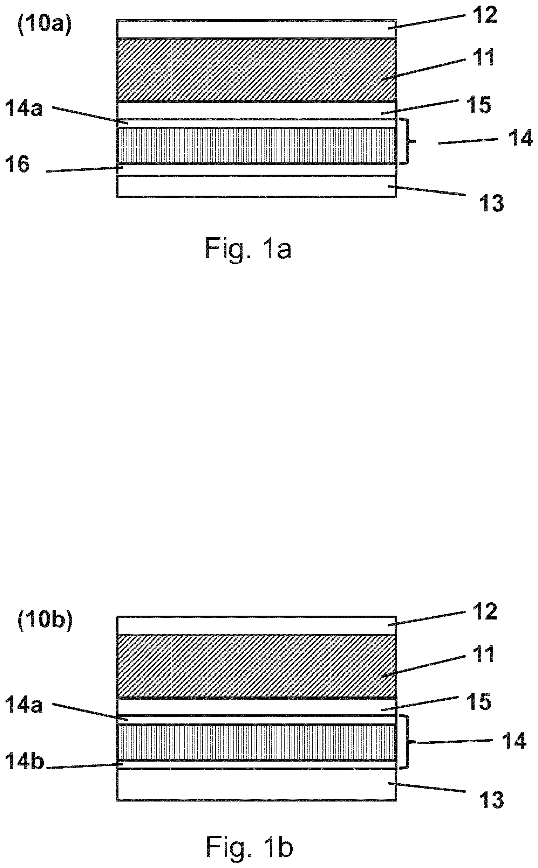

In Fig. 1a, a laminated packaging material 10a of the invention, for liquid carton packaging, is shown, in which the laminated material comprises a bulk layer 11 of paperboard having a bending force of 320 mN, and an outer liquid tight and heat sealable layer 12 of polyolefin applied on the outside of the bulk layer 11, which side is to be directed towards the outside of a packaging container produced from the packaging laminate. The polyolefin of the outer layer 12 is a conventional low density polyethylene (LDPE) of a heat sealable quality, but may include further similar polymers, including LLDPEs. An innermost liquid tight and heat sealable layer 13 is arranged on the opposite side of the bulk layer 11, i.e. the layer 13 will be in direct contact with the packaged product. The thus innermost heat sealable layer 13, which is to form very strong seals of a liquid packaging container made from the laminated packaging material, comprises one or more in combination of polyethylenes selected from the groups consisting of LDPE, linear low density polyethylene (LLDPE), and LLDPE produced by polymerising an ethylene monomer with a C4-C8, more preferably a C6-C8, alpha-olefin alkylene monomer in the presence of a metallocene catalyst, i.e. a so called metallocene - LLDPE (m-LLDPE).

The bulk layer 11 is laminated to a barrier film 14, from an oriented film substrate 14b comprising a polyester selected from the group consisting of polyethylene-2,5-furandicarboxylate (PEF) and polytrimethylene furandicarboxylate (PTF), a blend and a co-polymer thereof, in this example from PEF, further coated with a vapour deposition coating 14a comprising a metal or a metal oxide.

The barrier coating is an aluminium oxide coating, which is applied by PVD to a thickness of about 15 nm. Before the PVD coating operation was initiated, the surface of the film substrate was briefly pretreated by a plasma in order to render the surface more susceptible to the coating and create better bonding between coating and substrate.

The first, outer side of the barrier-coated film 14 is laminated to the bulk layer 11 by an intermediate bonding layer 15 of low density polyethylene (LDPE).

The interjacent bonding layer 15 is formed by means of melt extrusion and laminating the bulk layer 11 and the barrier film 14 to each other by applying immediate pressure to the three layers in a lamination roller nip. The thickness of the interjacent bonding layer 15 is from 12-18 µm, in this case about 15 µm.

The innermost heat sealable layer 13 may consist of two or several part-layers of the same or different kinds of LDPE or LLDPE or blends thereof. The innermost heat sealable layer 13 is adhered to the barrier film 14, i.e. to its inner side not carrying a barrier coating, by means of a primer or an adhesion-promoting layer 16. In this example, the heat sealable layer 13 comprises a blend of about 30 wt% LDPE with about 70 wt% of mLLDPE, which is co-extrusion coated together with an adhesion-promoting layer 16 of a low density polyethylene (LDPE) thoroughly blended with 0.3 wt % of ESBO for providing a good bonding strength to the inner side of the barrier film 14. In particular, an ESBO adhesion-promoting agent can be either melt compounded with LDPE or supplied in form of a masterbatch or concentrate directly during the manufacturing of the packaging material. A 5% masterbatch of ESBO in LDPE has proved particularly convenient for the latter purpose.

The thickness of the innermost heat sealable layer is about 30 µm. The thickness of the adhesion-promoting layer is about 5 µm.

The laminate structure according to this example is thus optimised regarding bio-based content, firstly since the polyethylene in the various layers used may be 100 % biobased, secondly since also the adhesion-promoting agent is an epoxidized plant substance, as well as the cellulose-based bulk layer. Thirdly, because the amount of metal or metal oxide barrier in the laminated material has been reduced to a few nanometer of thickness only. Also, a thinner barrier coating of metal or metal oxide enables easier recycling processes of the laminated material, and generates less carbon dioxide from the manufacturing process of the material.

Furthermore, the adhesion-promoting adhesive layer of ESBO in LDPE provides good adhesion, which improves over a time period of 24 hours after the extrusion lamination. It has been noted that a high level of adhesion, above 200 N/m, may be maintained between the film and the innermost PE layer also when packaging food products with high content of free fatty acid molecules, or wine containing sulphite. Such low-molecular compounds may trigger delamination by weakening the bonds at the interface between the different materials, and was expected also between PEF and LDPE layers. Such delamination, after a longer time of storage of the food product in the packaging container may cause loss of package integrity and damage the food product. However, with this laminate structure we have found that if the film substrate is an orientated PEF film, such as BOPEF, the adhesion provided by the LDPE-ESBO composition has a higher resistance towards migrating molecules of low molecular weight, such as free fatty acids and sulphites, when storing packages filled with juice and white wine at room temperature until failure occurred. Surprisingly, no failure was observed during 6 months.

In Fig. 1b, a laminated packaging material 10b of the invention, for liquid carton packaging, is shown, in which the laminated material structure and the materials are essentially the same as the one described in Fig. 1a, except for the adhesion-promoting layer 16 being replaced by a pre-applied, i.e. wet applied and subsequently dried, primer coating 14b, thus forming an integral part of the barrier film 14, on its inner side, in order to provide good adhesion to the subsequently melt extrusion-coated innermost heat-sealable layer 13 of LDPE. This approach enables fewer material layers involved in the manufacturing of the packaging laminate. Although, the compounds used in such integral primers are not usually based on biological, renewable sources, the amount of substance is so low, that it does not impact the total bio-based content significantly. The dry matter amount of such primers is conventionally from 0.05 to 0.2 g/m² only, and preferably not exceeding 0.1 g/m².

Alternatively, a different approach (not shown) to this may be taken, wherein the pre-primed side of such a barrier film 14-14b is turned in the other direction, and the interjacent laminating, bonding layer is a pure LDPE layer, which is melt extruded as an film curtain to laminate the primed surface of the barrier film, e.g. comprising PEI, to the bulk layer. The barrier coating of the barrier film is in such a case facing towards the inside.

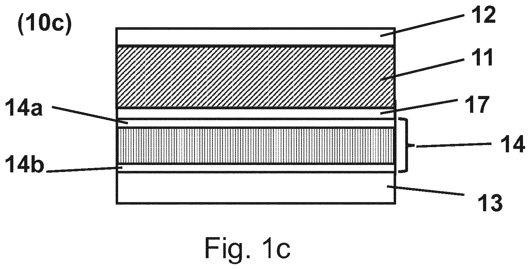

In Fig. 1c, a laminated packaging material 10c of the invention, for liquid carton packaging, is shown, in which the laminated material structure and the materials are essentially the same as the one described in Fig. 1b, except for the bonding of the barrier film 14 to the bulk layer being achieved by a different method and material. Accordingly, the barrier film 14, is laminated to the bulk layer 11 by so-called wet lamination, i.e. a dispersion or solution of an adhesion-promoting composition is applied onto the outer barrier-coated side 14a of the barrier film 14, and directly laminated by pressure to the bulk layer 11, which absorbs the moisture from the wet composition. Thus an acrylic-based dispersion is applied, comprising an aqueous composition of an ethylene acrylic acid copolymer, at about 3 g/m², dry weight. The amount of such the applied adhesion-promoting composition can be kept very low, as from 1 to 4 g/m², dry weight, and the adhesion strength between the two layers, by the thin, formed adhesion-promoting layer 17 will be very high. The adhesion-promoting layer, or coating, will in this case replace the interjacent bonding layer 15, which will thus not be needed. The primed side 14b of the barrier film 14 is melt extrusion-laminated to the innermost heat sealable layer 13 and the adhesion-promoting layer 16.

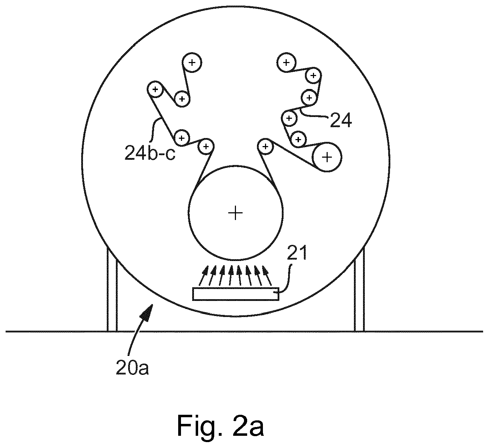

Fig. 2a is a diagrammatic view of an example of a plant 20a for physical vapour deposition (PVD) coating of a metal or metal oxide layer 14a onto a film substrate 14b; 24b-c. The thin film substrate 14b;24b-c is subjected, on the coating receiving side, to continuous evaporation deposition, of a metallised layer of aluminium, or by addition of oxygen to the process of an aluminium oxide 14a, and the coating obtains a thickness of 5-100 nm, preferably 5-50 nm, more preferably 2-30 nm, such that the coated barrier film 14 of the invention is formed. The aluminium vapour comes from a solid piece evaporation source 31.

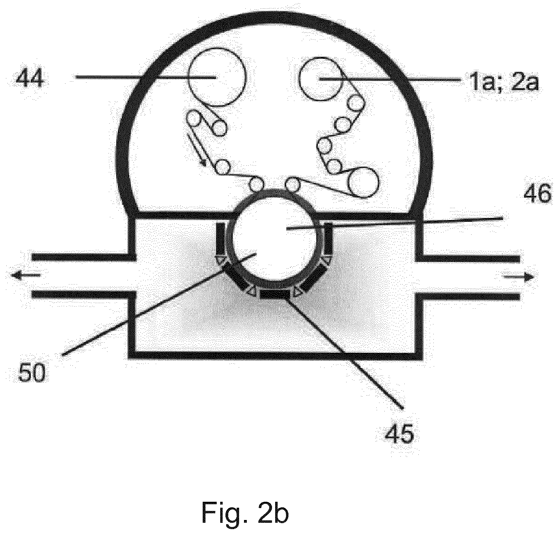

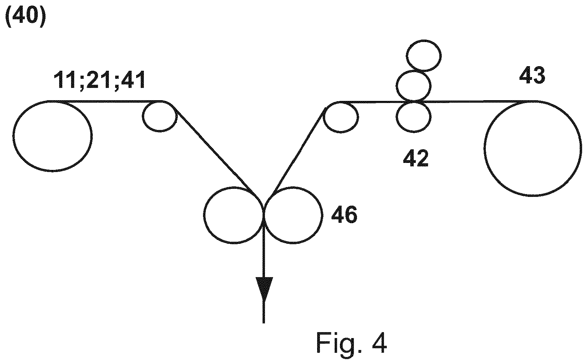

Fig. 2b is a diagrammatic view of an example of a plant 20b for plasma surface pre-treatment of a film substrate, or for enhanced vapour deposition coating, PECVD, of e.g. silicon oxide (SiOx) coatings onto a polymer film substrate. The film substrate 44 is subjected, on one of its surfaces, to continuous PECVD, of a plasma, in a plasma reaction zone 50 created in the space between magnetron electrodes 45, and a chilled film-transporting drum 46, which is also acting as an electrode, while the film is forwarded by the rotating drum, through the plasma reaction zone along the circumferential surface of the drum. The plasma for deposition coating of e.g. a SiOx or SiOxCy coating layer, or a diamond-like carbon coating (DLC) is formed from an organosilicon gas precursor composition or a hydrocarbon gas precursor composition, respectively, and the coating may applied as a sruface treatment only or to a thickness of 10-50 nm, preferably 20-30 nm, to form a barrier coated film. When such a surface pre-treatment is performed in connection to a physical vapour deposition coating process, it principally looks similar to the plant as shown in Figure 4, but considerably smaller. It may also be integrated with the vacuum coating chamber of the PVD plant, such that a pre-treatment zone is arranged, having a different pressure, divided from the coating zone by proper arrangements. The plasma treatment may be performed by magnetron plasma as shown in this figure, but alternatively also by inductively couple plasma arrangements.

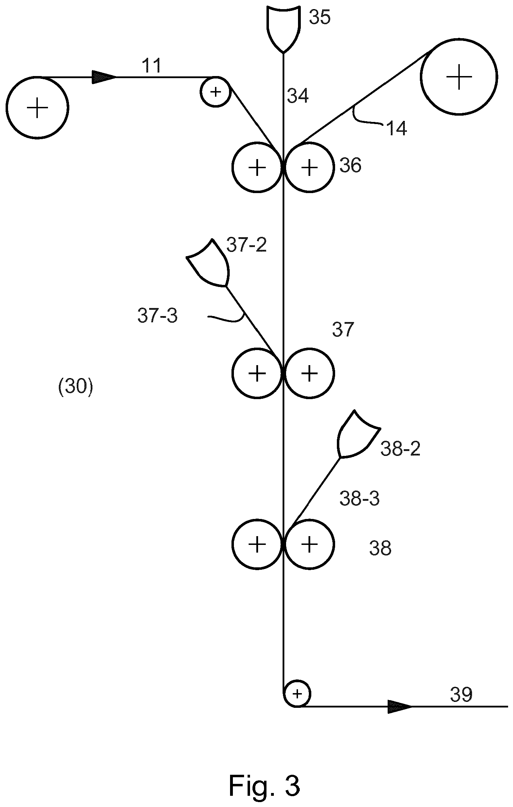

In Fig. 3, the lamination process 30 is shown, for the manufacturing of the laminated packaging materials 10a, 10b, of Fig. 1a, 1b,, respectively, wherein the bulk layer 11 is laminated to the barrier film 14 by extruding an interjacent bonding layer of LDPE 34 from an extrusion station 35 and pressing together in a roller nip 36. The barrier film 14 has a pre-applied barrier coating 14a on one side of the polyester film substrate and may have a pre-applied primer coating 14b on the surface of the film as shown in Fig. 1b, whereby the primer coating is to be directed towards the innermost heat sealable layer when laminated at the lamination station 38. Thus, the laminated paper bulk and the barrier film passes a second extruder feedblock 38-2 and a lamination nip 38, where an outermost heat sealable layer of LDPE 12; 38-3 is coated onto the outer side of the paper layer. Further, the laminate, including an outermost heat sealable polymer layer 12; 37-3, passes a third extruder feedblock 38-2 and a lamination nip 38, where an innermost heat sealable polymer layer 13; 38-3 is coated onto the barrier-film side of the paper-film laminate forwarded from 37. This latter step may advantageously be performed before lamination at 37, to protect the barrier film 14 on the inside as soon as possible, and according to a separate alternative embodiment, the lamination at 37 of the outermost layer to the paperboard may even be performed before the lamination at 36. The finished packaging laminate 39 is finally wound onto a storage reel, not shown.

Fig. 4 shows an alternative lamination process 40, for the manufacturing of the laminated packaging material 10c, wherein the bulk layer 41 ;11 is laminated to the barrier film 43;14 by wet lamination. Thus, a dispersion or solution of an adhesion-promoting composition is applied onto the outer barrier-coated 14a side of the barrier film 14 at a wet coating station 42 and directly laminated by pressure lamination in a roller nip 47 to the bulk layer 11, which absorbs the moisture from the adhesion-promoting composition and thus adheres the layers to each other. The lamination of the outer and inner layers may be carried out in the same manner as described in connection with Fig. 3 above.

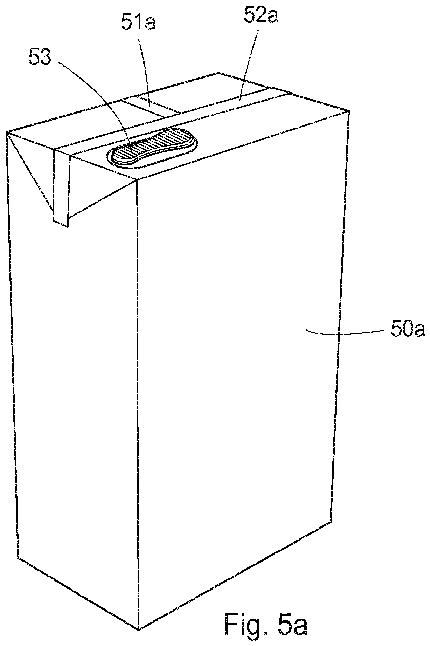

Fig. 5a shows an embodiment of a packaging container 50a produced from the packaging laminate 20 according to the invention. The packaging container is particularly suitable for beverages, sauces, soups or the like. Typically, such a package has a volume of about 100 to 1000 ml. It may be of any configuration, but is preferably brick-shaped, having longitudinal and transversal seals 51a and 52a, respectively, and optionally an opening device 53. In another embodiment, not shown, the packaging container may be shaped as a wedge. In order to obtain such a "wedge-shape", only the bottom part of the package is fold formed such that the transversal heat seal of the bottom is hidden under the triangular corner flaps, which are folded and sealed against the bottom of the package. The top section transversal seal is left unfolded. In this way the half-folded packaging container is still is easy to handle and dimensionally stable when put on a shelf in the food store or on a table or the like.

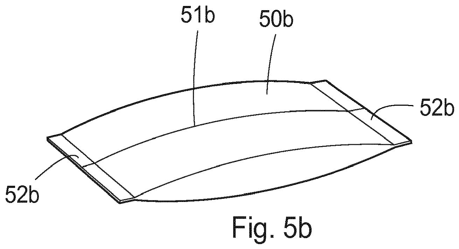

Fig. 5b shows an alternative, preferred example of a packaging container 50b produced from an alternative packaging laminate 20 according to the invention. The alternative packaging laminate is thinner by having a thinner paper bulk layer 21, and thus it is not dimensionally stable enough to form a parallellepipedic or wedge-shaped packaging container, and is not fold formed after transversal sealing 52b. It will thus remain a pillow-shaped pouch-like container and be distributed and sold in this form.

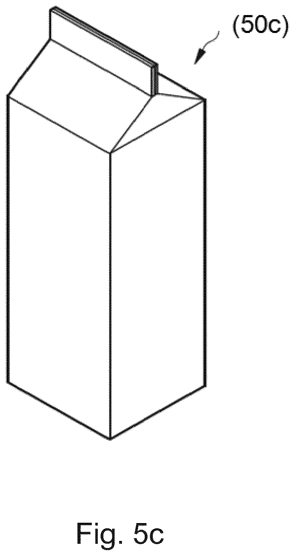

Fig. 5c shows a gable top package 50c, which is fold-formed from a pre-cut sheet or blank, from the laminated packaging material comprising a bulk layer of paperboard and the durable barrier film of the invention. Also flat top packages may be formed from similar blanks of material.

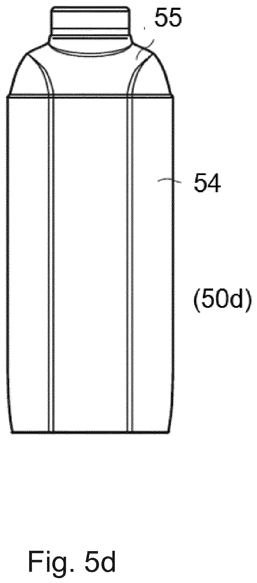

Fig. 5d shows a bottle-like package 50d, which is a combination of a sleeve 54 formed from a pre-cut blanks of the laminated packaging material of the invention, and a top 55, which is formed by injection moulding plastics in combination with an opening device such as a screw cork or the like. This type of packages are for example marketed under the trade names of Tetra Top^{®} and Tetra Evero^{®}. Those particular packages are formed by attaching the moulded top 55 with an opening device attached in a closed position, to a tubular sleeve 54 of the laminated packaging material, sterilizing the thus formed bottle-top capsule, filling it with the food product and finally fold-forming the bottom of the package and sealing it.

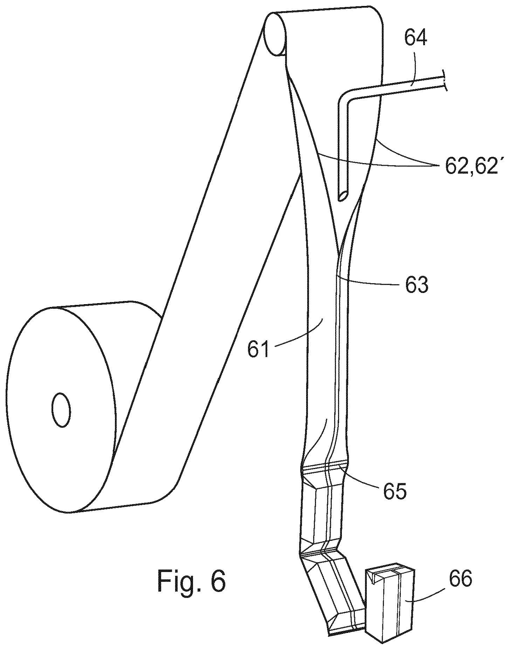

Fig. 6 shows the principle as described in the introduction of the present application, i.e. a web of packaging material is formed into a tube 61 by the longitudinal edges 62 of the web being united to one another in an overlap joint 63. The tube is filled 64 with the intended liquid food product and is divided into individual packages by repeated transversal seals 65 of the tube at a pre-determined distance from one another below the level of the filled contents in the tube. The packages 66 are separated by incisions in the transversal seals and are given the desired geometric configuration by fold formation along prepared crease lines in the material.

### EXAMPLES

Vapour deposition coated barrier-coated PEF-based film substrates may thus be laminated into carton-based packaging materials as a replacement for aluminium foil as a barrier material. When laminating such coated films to melt extruded polyolefin layers, loss of adhesion has been observed over time, however, either at the interface between the PEF substrate surface and the barrier coating, or between the barrier coating and the polyolefin (PE) lamination layer. Such loss or decrease of adhesive properties may be triggered by humidity (e.g. migrating from the packed liquid food product). The experience from laminating corresponding barrier-coated PET-based film substrates is that the initial adhesion may be improved to some extent by carrying out a plasma pre-treatment of the surface of the film substrate, such that the adhesion will be correspondingly better also after some time of storage, as compared to when no such surface pre-treatment has been performed. Due to the inherently lower barrier properties of a PET film substrate, in combination with barrier coatings from metals or metal oxides by vapour deposition, a better performance at long-term storage, such as several months, has never quite been expected or sought for such films.

A series of barrier-coated films were produced to manufacture packaging laminates. The laminated structure was the one principally described in Fig. 1a above, and manufactured according to the principal method described in Fig. 3. Comparable packaging laminates were produced from barrier films comprising PET instead of PEF. Thus, all laminates produced had the same principal structure and the same polymers and paperboard materials involved, and were laminated to each other in the same principal way:
/LDPE outermost/ paperboard/ LDPE/ **barrier coating/ film substrate**/ mLLDPE+LDPE blend innermost/

A standard BOPET film substrate of 12 µm thickness was coated and laminated and compared to an experimental BOPEF film of 15.8 µm thickness that was coated and laminated in the same manner. The BOPET film was a standard 12 µm BOPET film (Mitsubishi RNK 12).

The PEF film substrate was prepared by casting 250 µm thick sheets, which were oriented 3.8 times in the machine direction (MD) and 4.2 times in the transverse direction (CD), using a sequential tenter frame orientation process. The obtained film had an oxygen permeability (OTR) of 10.1 cc/m², day, atm at 23 ºC and 50% RH.

The BOPET film had an OTR of 110 cc/m², day, atm at 23 ºC and 50% RH. The two films were provided with various pre-treatments of the film substrate surface to be subsequently coated wih a vapour deposited barrier coating. A corona treatment was carried out using a conventional corona device with aluminium electrodes in-line with the film orientation unit. A power density of 40 W*min/m² was used. Alternatively to a corona treatment, a plasma treatment in connection to the vacuum coating equipment (vapour deposition) was applied. All plasma treatments were done using a 50 kHz alternating current plasma using a power density of 60 W*min/m² at a pressure of 30 microbar and in a process zone separated from the evaporation chamber. Treatment gases were supplied by nozzles directly into the plasma at a total flow of 3 standard litres per minute. Further details on such a plasma treatment process can be found in patent publications EP2902189 and EP2799589.

Barrier coatings from aluminium (metallisation), AlOx and SiOx, respectively, were applied by physical vapour deposition on a respective film substrate web of 800 mm width at a reference speed of 350 m/min. AlOx was produced by injecting oxygen into the evaporation zone, i.e. a reactive evaporation of an atmosphere comprising evaporated oxygen and aluminium at a certain ratio. SiOx was produced by electron beam evaporation (PVD) of a silicon suboxide source.

The three variants of barrier coatings were all compared at a fixed reference thickness of about 15 nm (which was checked by transmission electron microscopy).

Table 1 lists the results obtained regarding OTR levels of the films and the resistance to delamination, i.e. the Peel Force at the interface between the laminating bonding layer of LDPE and the barrier film. Delamination may then occur between the interior LDPE laminate layer and the top surface of the barrier coating of the barrier film, or between the barrier coating and the surface of the film substrate layer. The focus of the peel force tests for the purpose of the present invention has thus been directed to said interface, and not towards the interface between the film substrate and the innermost heat sealable and liquid tight layer, although also the adhesion at this interface is an important one, and needs to be handled by choice of appropriate primers or adhesion-promoting compositions, since the surface of PEF-type polymers are more or less incompatible with polyolefins.

From these tests, we have seen that also PEF film substrates may be coated with a variety of metal or metal oxide coatings, to be included in carton-based packaging laminates. Nevertheless, without a surface pre-treatment of the film substrate, the OTR of such a metal or metal oxide barrier-coated film can barely go below 0.5 cc/m², day, atm at 23 ºC and 50% RH, and thus would seem an expensive type of film for what is achieved. Furthermore, the humid conditions present in the packages of liquid-carton packaging would be expected to lead to delamination of the barrier coating from the film substrate, or from the lamination bonding layer (to the carton bulk layer), just as expected from such coated PET films.

When using a plasma pre-treatment of the PEF film substrate surface, the adhesion durability in humid conditions was strongly and unexpectedly increased, however, which makes such a laminated packaging material suitable for practical liquid-food applications.

When the PEF surface is treated with a plasma based on a gas mixture of nitrogen and oxygen, an OTR as low as 0.1 cc/m², day, atm at 23 ºC and 50% RH, may be obtained. Interestingly, some effect is also observed with pre-treatments not comprising oxygen, but merely pure argon and nitrogen.

It can be seen that the ratio between the permeabilities of uncoated BOPET and BOPEF films is about 10.9. We have found that the ratio significantly increased after PVD metal or metal oxide coating, to 15 and up to 23, i.e. that the OTR of the barrier-coated films decreased far below what could be expected.

It is believed that this effect may be due to the enhanced polarity of the furan ring and its synergy with the plasma treatment.

With respect to aseptic packing of liquid food it is required that the laminated packaging material structure does not delaminate or show loss of adhesion after filling with the liquid. When the adhesion between the barrier film and the lamination layer decreases below a certain level, the asepticity may be at risk due to the possible occurance of pin holes or other defects in the layers involved. This may be observed in particular after a month of storing food in a package from a laminate, when the peeling force between the barrier film (ie coated, non-pre-treated, BOPEF) and the adjacent lamination layer of LDPE decreases to below 100 N/meter.

It is remarkable, however, that coated BOPEF invariably shows better resistance to the humid environment caused by contact with liquid food. In the case of vacuum coated BOPET, a minimal level of acceptance is achieved only when a plasma pretreatment is done in presence of HMDSO (hexamethyl disiloxane) or acetylene. On the contrary, the corresponding barrier-coated BOPEF films and the packaging material of the invention show excellent adhesion towards a layer of melt extruded LDPE even after one month, and longer, at humid conditions.

Concerning SiOx-coated films, it can be observed that adhesion towards the LDPE melt-extruded lamination layer never becomes satisfactory in these experiments. According to previous experience, lamination of SiOx to the carton bulk layer must comprise a speciality adhesive copolymer such as a silane grafted polyethylene or a wet adhesive (preferably based on polyurethane or acrylic compositions). When the SiOx-coated BOPEF is laminated using such adhesion-promoting compositions, an enhanced adhesion (peel force) in comparison to barrier-coated BOPET films is also obtained.

However, the adhesion levels to adjacent polymer layers in a laminated material at high humidity are very much better when the barrier coating is aluminium (metallisation coating) and AlOx, and at their absolute best in the case of AlOx coatings. The AlOx-coated barrier films maintain excellent adhesion properties above 200 N/m towards adjacent polymers, such as polyolefins, such as PE, at high humidity, regardless of which pretreatment gas or precursor was used.

According to a special embodiment, as seen from the further experimental results, the use of reactive gases capable of creating a thin "primer" during the plasma pre-treatment are advantageous.

For example, it has been found that if the plasma pre-treatment is carried out in the presence of hydrocarbons or organosilanes, a very thin layer (less than one nanometer) of a DLC or SiOxCy layer may be deposited on the film and function as an adhesion primer between the PVD barrier-coating subsequently applied, and the PEF-based film substrate.

Under these conditions, films with OTR below 0.07 cc/m2/day/atm at 23 ºC and 50% RH, can be obtained. The films also exhibit great adhesion durability at humid conditions.

Also SiOx-coated film substrates, are further improved in such a priming type of a pre-treatment, especially in the presence of HMDSO or Acetylene.

| TABLE 1: | Films | | | Laminates | | | |
|---|---|---|---|---|---|---|---|
| cc/m², day, atm at 23 ºC and 50% RH | OTR | OTR | OTR ratio | BOPET; Peeling Force (N/m) | | BOPEF; Peeling Force (N/m) | |
| | BOPET 12 µm Thickness | BOPEF 15.8 µm Thickness | | 1 day (dry) | 2 months humid 80% (package) | 1 day (dry) | 2 months humid 80% (package) |
| | | | | | | | |
| No barrier coating | 110 | 10.1 | 10.9 | - | - | - | - |
| | | | | | | | |

| **EXAMPLE 1** (With Corona pretreatment) | | | | | | | |
|---|---|---|---|---|---|---|---|
| Aluminium coated | 1.8 | 0.1 | 18.0 | 150 | 80 | 185 | 195 |
| AIOx coated | 3.2 | 0.2 | 16.0 | 220 | 60 | 235 | 205 |
| SiOx coated | 3.6 | 0.24 | 15.0 | 90 | 20 | 55 | 35 |
| | | | | | | | |

| **EXAMPLE 2** (With 80/20 Ar/O₂ plasma pre- treatment) | | | | | | | |
|---|---|---|---|---|---|---|---|
| Aluminium coated | 2.1 | 0.1 | 21.0 | 160 | 82 | 192 | 148 |
| AIOx coated | 2.8 | 0.12 | 23.3 | 245 | 30 | 245 | 200 |
| SiOx coated | 3.1 | 0.19 | 16.3 | 70 | 25 | 82 | 50 |
| | | | | | | | |

| **EXAMPLE 3** (With 80/20 Ar/N₂ plasma pre- treatment) | | | | | | | |
|---|---|---|---|---|---|---|---|
| Aluminium coated | 1.9 | 0.11 | 17.3 | 150 | 62 | 150 | 138 |
| AIOx coated | 2.2 | 0.12 | 18.3 | 220 | 37 | 210 | 190 |
| SiOx coated | 2.7 | 0.17 | 15.9 | 56 | 18 | 69 | 12 |
| | | | | | | | |

| **EXAMPLE 4** (With 90/10 O₂/HMDSO plasma pre-treatment) | | | | | | | |
|---|---|---|---|---|---|---|---|
| Aluminium coated | 1.5 | 0.03 | 50.0 | 130 | 110 | 130 | 135 |
| AIOx coated | 3.0 | 0.11 | 27.3 | 260 | 152 | 260 | 255 |
| SiOx coated | 2.7 | 0.10 | 27.0 | 55 | 32 | 55 | 58 |
| | | | | | | | |

| **EXAMPLE 5** (With 90/10 Ar/acetylene plasma pre-treatment) | | | | | | | |
|---|---|---|---|---|---|---|---|
| Aluminium coated | 1.1 | 0.03 | 36.7 | 172 | 150 | 210 | 205 |
| AIOx coated | 0.9 | 0.05 | 18.0 | 306 | 202 | 350 | 280 |
| SiOx coated | 3.9 | 0.25 | 15.6 | 38 | 45 | 38 | 28 |
| | | | | | | | |
| | | | | | | | |

## Claims

1. Laminated packaging material (10a-d; 20a-d), for packaging of liquid food products, comprising a bulk layer (11) of paper or paperboard or other cellulose-based material, a first outermost liquid tight, heat sealable thermoplastic layer (12), arranged on the outside of the bulk layer to constitute the outside of a package formed from the packaging material, a second innermost liquid tight, heat sealable thermoplastic layer (13) arranged on the inside of the bulk layer to be in direct contact with the filled food product, and a barrier film (14) from a film substrate comprising a polyester selected from the group consisting of polyethylene-2,5-furandicarboxylate (PEF) and polytrimethylene furandicarboxylate (PTF), a blend and a co-polymer thereof, coated with a vapour deposited barrier coating comprising aluminium oxide (AlOx), the barrier film being laminated between the bulk layer and the second, innermost liquid tight, heat sealable thermoplastic layer, wherein the barrier film is laminated to the bulk layer by an interjacent thermoplastic bonding layer comprising a polyolefin, wherein the vapour deposited barrier coating is facing towards the bulk layer and wherein the surface of the film substrate has been pre-treated by plasma or corona treatment on the surface to be coated by the aluminium oxide.

2. Laminated packaging material as claimed in claim 1, wherein the thickness of the film substrate (14) is from 8 to 20 µm.

3. Laminated packaging material as claimed in any one of the preceding claims, wherein the film substrate (14) is a pre-manufactured, bi- or mono-axially oriented film, comprising said polyester or blend of polyesters.

4. Laminated packaging material as claimed in any one of the preceding claims, wherein the film substrate has been pre-treated by a plasma containing a precursor compound selected from a hydrocarbon, a silane, a siloxane and a mixture thereof, on the surface to be coated by the aluminium oxide.

5. Laminated packaging material as claimed in any one of the preceding claims, wherein the barrier film is laminated to the bulk layer by an interjacent thermoplastic bonding layer comprising a polyethylene or a polypropylene homo- or copolymer.

6. Laminated packaging material as claimed in any one of the preceding claims, which has an oxygen transmission lower than 0.05 cc/m², day, atm, 21 % O₂, at 23 °C and 50% RH, as measured with Oxtran 2-60 by an equipment from Mocon.

7. Laminated packaging material as claimed in any one of the preceding claims, wherein the film substrate (14) is, on the side not coated with a metal or metal oxide, laminated to an adhesion-promoting layer (16), which is a blend of a polyolefin with an epoxidized compound selected from the group consisting of epoxidized natural oil, such as an epoxidized soy bean oil (ESBO) or epoxidized linseed oil (ELO), epoxidized natural rubber, and cyclic carbonate derivatives of epoxidized natural oil or rubber, at an amount of from 0.1 to 0.5 wt % of the total adhesion-promoting layer.

8. Laminated packaging material as claimed in any one of the preceding claims, wherein the thermoplastic polymer of the second innermost liquid tight, heat sealable thermoplastic layer (13) is a polyolefin, such as a polyethylene or a polypropylene homo- or copolymer.

9. Method of manufacturing the laminated packaging material as claimed in any one of claims 1-8, comprising the steps, in any order, of
providing a bulk layer (11) of paper or paperboard or other cellulose-based material,
providing (36) a barrier film (14) by pre-treating a film substrate comprising a polyester selected from the group consisting of polyethylene-2,5-furandicarboxylate (PEF), polytrimethylene furandicarboxylate/ furanoate (PTF), a blend or a co-polymer thereof, by plasma or corona treatment on the surface to be coated,
vapour deposition coating the pre-treated film substrate with a barrier coating comprising aluminium oxide,
laminating the barrier film to the inner side of the bulk layer (11), by means of an interjacent laminating layer, which is also known as interjacent thermoplastic bonding layer, comprising a polyolefin,
applying a first outermost liquid tight, heat sealable thermoplastic layer (12) onto the outer side of the bulk layer, and applying a second innermost liquid tight, heat sealable thermoplastic layer (13) on the inner side of the barrier film (14).

10. Method as claimed in claim 9, wherein the film substrate is pre-treated with a plasma containing a precursor compound selected from a hydrocarbon, a silane, a siloxane and a mixture thereof.

11. Method as claimed in any one of claims 9-10, wherein the barrier film is laminated to the bulk layer by melt (co-)extruding (35) an interjacent laminating layer (15) between the bulk layer and the barrier layer, and subsequently applying pressure in a lamination roller nip.

12. Method as claimed in any one of claims 9-11, wherein the interjacent laminating layer (15) comprises a polyethylene or a polypropylene homo- or copolymer.

13. Method as claimed in any one of claims 9-12, wherein the second innermost liquid tight, heat sealable thermoplastic layer (13) is applied on the inner side of the barrier film (14), by means of melt extrusion coating, or melt co-extrusion coating together with an adhesion-promoting polymer layer (16) to contact the barrier film (14).

14. Packaging container (50a; 50b; 50c; 50d) comprising the laminated packaging material as defined in any one of claims 1-8.

## Patentansprüche

1. Laminiertes Verpackungsmaterial (10a-d; 20a-d) zum Verpacken flüssiger Lebensmittelprodukte, umfassend eine Masseschicht (11) aus Papier oder Karton oder einem anderen Material auf Cellulosebasis, eine erste, äußerste, flüssigkeitsdichte heißsiegelfähige thermoplastische Schicht (12), die an der Außenseite der Masseschicht angeordnet ist, um die Außenseite einer aus dem Verpackungsmaterial gebildeten Verpackung zu bilden, eine zweite, innerste, flüssigkeitsdichte heißsiegelfähige thermoplastische Schicht (13), die an der Innenseite der Masseschicht angeordnet ist, um in direktem Kontakt mit dem eingefüllten Lebensmittelprodukt zu sein, und einen Sperrfilm (14) aus einem Filmsubstrat, das einen Polyester ausgewählt aus der Gruppe bestehend aus Polyethylen-2,5-furandicarboxylat (PEF) und Polytrimethylenfurandicarboxylat (PTF), einem Gemisch und einem Copolymer davon umfasst, beschichtet mit einer gasphasenabgeschiedenen Sperrbeschichtung, die Aluminiumoxid (AlOx) umfasst, wobei der Sperrfilm zwischen die Masseschicht und die zweite, innerste, flüssigkeitsdichte heißsiegelfähige thermoplastische Schicht laminiert ist, wobei der Sperrfilm durch eine dazwischenliegende thermoplastische Bindeschicht, die ein Polyolefin umfasst, an die Masseschicht laminiert ist, wobei die gasphasenabgeschiedenen Sperrbeschichtung zu der Masseschicht zeigt und wobei die Oberfläche des Filmsubstrats durch Plasma- oder Koronabehandlung an der Oberfläche, die mit dem Aluminiumoxid beschichtet werden soll, vorbehandelt worden ist.

2. Laminiertes Verpackungsmaterial gemäß Anspruch 1, wobei die Dicke des Filmsubstrats (14) von 8 bis 20 µm beträgt.

3. Laminiertes Verpackungsmaterial gemäß einem der vorstehenden Ansprüche, wobei das Filmsubstrat (14) ein vorgefertigter bi- oder monoaxial orientierter Film ist, der den Polyester oder das Gemisch von Polyestern umfasst.

4. Laminiertes Verpackungsmaterial gemäß einem der vorstehenden Ansprüche, wobei das Filmsubstrat mit einem Plasma, das eine Vorläuferverbindung ausgewählt aus einem Kohlenwasserstoff, einem Silan, einem Siloxan und einem Gemisch davon enthält, an der Oberfläche, die mit dem Aluminiumoxid beschichtet werden soll, vorbehandelt worden ist.

5. Laminiertes Verpackungsmaterial gemäß einem der vorstehenden Ansprüche, wobei der Sperrfilm durch eine dazwischenliegende thermoplastische Bindeschicht, die ein Polyethylen oder ein Polypropylen-Homo- oder Copolymer umfasst, an die Masseschicht laminiert ist.

6. Laminiertes Verpackungsmaterial gemäß einem der vorstehenden Ansprüche, das eine Sauerstoffdurchlässigkeit von kleiner als 0,05 cc/m²,Tag, atm, 21 % O₂, bei 23 °C und 50 % RH, wie gemessen mit Oxtran 2-60 durch ein Gerät von Mocon, aufweist.

7. Laminiertes Verpackungsmaterial gemäß einem der vorstehenden Ansprüche, wobei das Filmsubstrat (14) an der nicht mit einem Metall oder Metalloxid beschichteten Seite an eine haftfördernde Schicht (16) laminiert ist, die ein Gemisch eines Polyolefins mit einer epoxidierten Verbindung ausgewählt aus der Gruppe bestehend aus einem epoxidierten natürlichen Öl, wie z.B. einem epoxidierten Sojabohnenöl (ESBO) oder epoxidierten Leinsamenöl (ELO), epoxidierten Naturkautschuk und cyclischen Carbonatderivaten von epoxidiertem natürlichem Öl oder Kautschuk in einer Menge von 0,1 bis 0,5 Gew.-% der gesamten haftfördernden Schicht ist.

8. Laminiertes Verpackungsmaterial gemäß einem der vorstehenden Ansprüche, wobei das thermoplastische Polymer der zweiten, innersten, flüssigkeitsdichten heißsiegelfähigen thermoplastischen Schicht (13) ein Polyolefin ist, wie z.B. ein Polyethylen oder ein Polypropylen-Homo- oder Copolymer.

9. Verfahren zur Herstellung des laminierten Verpackungsmaterials gemäß einem der Ansprüche 1-8, umfassend die Schritte in beliebiger Reihenfolge:
Bereitstellen einer Masseschicht (11) aus Papier oder Karton oder einem anderen Material auf Cellulosebasis,
Bereitstellen (36) eines Sperrfilms (14) durch Vorbehandeln eines Filmsubstrats, das einen Polyester ausgewählt aus der Gruppe bestehend aus Polyethylen-2,5-furandicarboxylat (PEF), Polytrimethylenfurandicarboxylat/furanoat (PTF), einem Gemisch oder einem Copolymer davon umfasst, durch Plasma- oder Koronabehandlung an der Oberfläche, die beschichtet werden soll,
Beschichten des vorbehandelten Filmsubstrats durch Gasphasenabscheidung mit einer Sperrbeschichtung, die Aluminiumoxid umfasst,
Laminieren des Sperrfilms an die Innenseite der Masseschicht (11) mithilfe einer dazwischenliegenden Laminierschicht, auch als dazwischenliegende thermoplastische Bindeschicht bekannt, die ein Polyolefin umfasst,
Aufbringen einer ersten, äußersten, flüssigkeitsdichten heißsiegelfähigen thermoplastischen Schicht (12) auf die Außenseite der Masseschicht und Aufbringen einer zweiten, innersten, flüssigkeitsdichten heißsiegelfähigen thermoplastischen Schicht (13) auf die Innenseite des Sperrfilms (14).

10. Verfahren gemäß Anspruch 9, wobei das Filmsubstrat mit einem Plasma, das eine Vorläuferverbindung ausgewählt aus einem Kohlenwasserstoff, einem Silan, einem Siloxan und einem Gemisch davon enthält, vorbehandelt wird.

11. Verfahren gemäß einem der Ansprüche 9-10, wobei der Sperrfilm durch Schmelz(co)extrusion (35) einer dazwischenliegenden Laminierschicht (15) zwischen die Masseschicht und die Sperrschicht und anschließende Anwendung von Druck in einem Laminationswalzenspalt an die Masseschicht laminiert wird.

12. Verfahren gemäß einem der Ansprüche 9-11, wobei die dazwischenliegende Laminierschicht (15) ein Polyethylen oder ein Polypropylen-Homo- oder Copolymer umfasst.

13. Verfahren gemäß einem der Ansprüche 9-12, wobei die zweite, innerste, flüssigkeitsdichte heißsiegelfähige thermoplastische Schicht (13) mithilfe von Schmelzextrusionsbeschichtung oder Schmelzcoextrusionsbeschichtung zusammen mit einer haftfördernden Polymerschicht (16) zum Kontakt mit dem Sperrfilm (14) auf die Innenseite des Sperrfilms (14) aufgebracht wird.

14. Verpackungsbehälter (50a; 50b; 50c; 50d), umfassend das laminierte Verpackungsmaterial gemäß einem der Ansprüche 1-8.

## Revendications

1. Matériau d'emballage stratifié (10a-d ; 20a-d), pour l'emballage de produits alimentaires liquides, comprenant une couche de masse (11) de papier ou de carton ou d'un autre matériau à base de cellulose, une première couche thermoplastique thermoscellable étanche aux liquides la plus à l'extérieur (12), agencée sur l'extérieur de la couche de masse pour constituer l'extérieur d'un emballage formé à partir du matériau d'emballage, une deuxième couche thermoplastique thermoscellable étanche aux liquides la plus à l'intérieur (13) agencée sur l'intérieur de la couche de masse pour être en contact direct avec le produit alimentaire rempli, et un film barrière (14) d'un substrat de film comprenant un polyester choisi dans le groupe constitué par un polyéthylène-2,5-furannedicarboxylate (PEF) et un polytriméthylène furannedicarboxylate (PTF), un mélange et un copolymère correspondant, revêtu par un revêtement barrière déposé en phase vapeur comprenant de l'oxyde d'aluminium (AlOx), le film barrière étant stratifié entre la couche de masse et la deuxième couche thermoplastique thermoscellable étanche aux liquides la plus à l'intérieur, le film barrière étant stratifié sur la couche de masse par une couche de liaison thermoplastique interjacente comprenant une polyoléfine, le revêtement barrière déposé en phase vapeur étant orienté vers la couche de masse et la surface du substrat de film ayant été prétraitée par traitement par plasma ou corona sur la surface devant être revêtue par l'oxyde d'aluminium.

2. Matériau d'emballage stratifié tel que revendiqué dans la revendication 1, l'épaisseur du substrat de film (14) étant de 8 à 20 µm.

3. Matériau d'emballage stratifié tel que revendiqué dans l'une quelconque des revendications précédentes, le substrat de film (14) étant un film orienté de manière biaxiale ou monoaxiale, préfabriqué, comprenant ledit polyester ou mélange de polyesters.

4. Matériau d'emballage stratifié tel que revendiqué dans l'une quelconque des revendications précédentes, le substrat de film ayant été prétraité par un plasma contenant un composé précurseur choisi parmi un hydrocarbure, un silane, un siloxane et un mélange correspondant, sur la surface devant être revêtue par l'oxyde d'aluminium.

5. Matériau d'emballage stratifié tel que revendiqué dans l'une quelconque des revendications précédentes, le film barrière étant stratifié sur la couche de masse par une couche de liaison thermoplastique interjacente comprenant un polyéthylène ou un homopolymère ou copolymère de polypropylène.

6. Matériau d'emballage stratifié tel que revendiqué dans l'une quelconque des revendications précédentes, qui possède une transmission d'oxygène inférieure à 0,05 cm³/m², jour, atm, 21 % O₂, à 23 °C et 50 % RH, comme mesurée avec un Oxtran 2-60 par un appareil de Mocon.

7. Matériau d'emballage stratifié tel que revendiqué dans l'une quelconque des revendications précédentes, le substrat de film (14) étant, sur le côté non revêtu par un métal ou oxyde métallique, stratifié sur une couche favorisant l'adhérence (16), qui est un mélange d'une polyoléfine avec un composé époxydé choisi dans le groupe constitué par une huile naturelle époxydée, telle qu'une huile de fèves de soja époxydée (ESBO) ou une huile de lin époxydée (ELO), un caoutchouc naturel époxydé et des dérivés de carbonate cyclique d'huile ou de caoutchouc naturel(le) époxydé(e), en une quantité allant de 0,1 à 0,5 % en poids de la couche favorisant l'adhérence totale.

8. Matériau d'emballage stratifié tel que revendiqué dans l'une quelconque des revendications précédentes, le polymère thermoplastique de la deuxième couche thermoplastique thermoscellable étanche aux liquides la plus à l'intérieur (13) étant une polyoléfine, telle qu'un polyéthylène ou un homopolymère ou copolymère de polypropylène.

9. Procédé de fabrication du matériau d'emballage stratifié tel que revendiqué dans l'une quelconque des revendications 1 à 8, comprenant les étapes, dans un ordre quelconque, de
mise à disposition d'une couche de masse (11) de papier ou de carton ou d'un autre matériau à base de cellulose,
mise à disposition (36) d'un film barrière (14) par prétraitement d'un substrat de film comprenant un polyester choisi dans le groupe constitué par un polyéthylène-2,5-furannedicarboxylate (PEF), un polytriméthylène furannedicarboxylate/furannoate (PTF), un mélange ou un copolymère correspondant, par traitement par plasma ou corona sur la surface devant être revêtue,
revêtement par dépôt en phase vapeur du substrat de film prétraité avec un revêtement barrière comprenant un oxyde d'aluminium,
stratification du film barrière sur le côté intérieur de la couche de masse (11), au moyen d'une couche de stratification interjacente, qui est également connue comme couche de liaison thermoplastique interjacente, comprenant une polyoléfine,
application d'une première couche thermoplastique thermoscellable étanche aux liquides la plus à l'extérieur (12) sur le côté extérieur de la couche de masse, et application d'une deuxième couche thermoplastique thermoscellable étanche aux liquides la plus à l'intérieur (13) sur le côté intérieur du film barrière (14).

10. Procédé tel que revendiqué dans la revendication 9, le substrat de film étant prétraité par un plasma contenant un composé précurseur choisi parmi un hydrocarbure, un silane, un siloxane et un mélange correspondant.

11. Procédé tel que revendiqué dans l'une quelconque des revendications 9 et 10, le film barrière étant stratifié sur la couche de masse par (co)extrusion de masse fondue (35) d'une couche de stratification interjacente (15) entre la couche de masse et la couche barrière, et subséquemment application de pression dans une zone de contact entre des rouleaux de stratification.

12. Procédé tel que revendiqué dans l'une quelconque des revendications 9 à 11, la couche de stratification interjacente (15) comprenant un polyéthylène ou un homopolymère ou copolymère de polypropylène.

13. Procédé tel que revendiqué dans l'une quelconque des revendications 9 à 12, la deuxième couche thermoplastique thermoscellable étanche aux liquides la plus à l'intérieur (13) étant appliquée sur le côté intérieur du film barrière (14), au moyen d'un revêtement par extrusion de masse fondue, ou d'un revêtement par coextrusion de masse fondue conjointement avec une couche de polymère favorisant l'adhérence (16) pour venir en contact avec le film barrière (14).

14. Récipient d'emballage (50a ; 50b ; 50c ; 50d) comprenant le matériau d'emballage stratifié tel que défini dans l'une quelconque des revendications 1 à 8.
